# EUROPEAN PATENT SPECIFICATION

(11) **EP 1 701 795 B1**
(45) Date of publication and mention of the grant of the patent: **19.06.2013**
(21) Application number: 04808894.2
(22) Date of filing: 23.12.2004
(51) Int. Cl.: B03B 9/06, B09B 3/00, B29B 17/02

(54) **METHOD AND PLANT FOR PRE-TREATMENT OF SOURCE SEPARATED WET ORGANIC WASTE**
VERFAHREN UND ANLAGE ZUR VORBEHANDLUNG VON AN DER QUELLE GETRENNTEM NASSEM ORGANISCHEM ABFALL
PROCEDE ET INSTALLATION DE PRETRAITEMENT DE DECHETS ORGANIQUES HUMIDES SEPARES A LA SOURCE

(30) Priority: 23.12.2003 NO 20035803
(43) Date of publication of application: 20.09.2006
(73) Proprietor: Knap, Arne Hjalmar, 3160 Stokke (NO); Nordahl, Geir, 3170 Sem (NO)
(72) Inventor: Knap, Arne Hjalmar, 3160 Stokke (NO); Nordahl, Geir, 3170 Sem (NO)
(74) Representative: Modin, Jan
(86) International application number: PCT/NO2004/000400
(87) International publication number: WO 2005/061114

(56) References cited:
- EP-A2- 0 589 672
- EP-A2- 1 430 953
- WO-A1-2004/037740
- US-A- 6 095 441

## Description

The present invention is related to a method and a plant for pre-treatment of source separated wet organic waste. Such method and plant are known from EP1430953.

Source separated wet organic waste from household, food waste from institutional households such as hospitals, hotels, institutions and such, as well as food waste from retail business where the expiry date has expired and other articles of food which can contain heavy objects such as metals, stone and such and/or plastic films which has to be pre-treated after collection. Such waste material is defined as "wet organic waste".

The waste may be wrapped in sacks of plastic or paper or in bags of plastic or paper. The waste also may be wrapped in bags or sacks of so-called biopolymers.

The material is transported to a reception bunker at the treatment plant by refuse collection vehicles or other vehicles suitable for the purpose.

Waste of the above mentioned type exists in very many different variants. The waste partly varies during the year as the temperature has an influence. Whereas some local authorities collect waste each week, other authorities will collect waste every second week to such an extent that the decomposition of the received waste will vary during the year and also on a geographical basis. This on the other hand make requirements to the design of the equipment. Even if there exists several suppliers of equipment for segregation of waste, they only cover part of the segregation process.

With the method and the plant according to the present invention, pre-treatment of wet organic waste may be performed in such a way that the result is well suited for different consecutive processes. This is achieved with the present invention as defined by the features stated in the claims.

With the method and the plant according to the present invention a filtrate is achieved which especially is suitable for biological decomposition in such a way that a high biogas yield is achieved combined with a biologically stable digestate in a following biogas process.

Furthermore a digestate is achieved which is almost 100 % free of plastic film, resulting in no need for after-treatment of the decomposing remainder before the following use for example as a soil improver. Additionally the remainder waste which is achieved, has a low content of biological decomposable material, giving low losses.

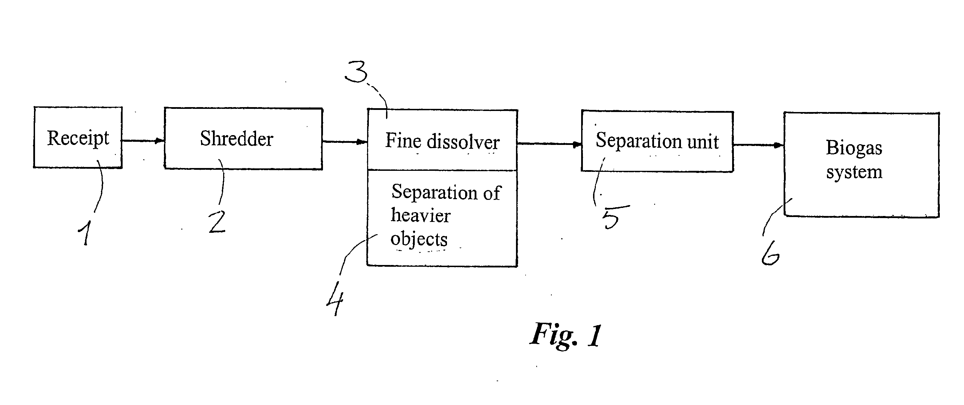

One embodiment of the invention is described in the following description with reference to the drawing which discloses in figure 1 a flow diagram of the process of pre-treatment, figure 2 discloses schematically the working method of the coarse shredder and of the shredder unit in an end view, figure 3 discloses schematically the working method of the shredder unit in a ground view and figure 4 discloses schematically the working method of the dissolver in a vertical section.

Wet organic waste received at a reception bunker 1, is transported from the reception bunker 1 to a shredder unit 2 comprising a screw conveyor. The shredder unit 2 opens sacks and bags and the waste is divided into a specific particle size. The shreddering may be characterized as a dry process. The shredder unit 2 is directly and physically connected above a fine dissolver unit 3 in such a way that the shredded waste is forced down by gravity.

Here a process liquid (filtrate from the dewatering of digestate or thin phase from the digester) until a content of solid of 6-12 % is achieved. The mixture is milled or dissolved by means of a quick rotating paddle mechanism. This unit is named a "dissolver".

When the dissolving is finished, heavier objects fall down to the bottom of a dissolver vessel 4 and is removed from the bottom. The rest of the mixture is pumped into a separation unit 5 for plastics.

In the separation unit 5 for plastic is separated from the liquid by means of a screw press separator. The screw press separator contains an internal screw which maintains the sieve area clean and transports the goods from the sieve (the plastic) against a vertical plate for dewatering and thereafter is removed from the separator.

The filtrate which is almost free of plastics and components which cannot be dissolved below a specific particle size, thereafter is pumped into the biogas system 6 for production of biogas and digestate.

The pre-treatment process is a batch process and fully automatically controlled by a PLS having a suitable instrumentation:
A certain amount (for example 500 kg) of waste is transported to a shredder unit or a coarse shredder unit and further up into the dissolver. The amount is controlled by means of load cells at the reception bunker 1.

During application of the waste process liquid is added, the amount of which is controlled by means of level cells in the dissolver. The mixture is dissolved during a specific time with full speed in the paddle mechanism. Upon dissolving the speed is decreased, enabling heavy objects to fall down to the bottom due to the tapered shape of the container. The heavy material is taken out by means of an oblique screw. The mixture thereafter is pumped into a storage tank directly above the plastic separation unit 5. In the plastic separation unit 5 plastics as well as other material having a particle size larger than 8-10 nun is separated. The filtrate is pumped directly to the biogas system 6 whereas separated material is collected in a suitable container. When the dissolver is empty a new batch immediately can be initiated.

At the reception bunker 1 any shape of a waste reception may be used, which is equipped with a mechanical feeding. This may be a rectangular container with a feeding mechanism in the bottom or a V-shaped container with a feeding in the bottom. The storage silo may be placed on load cells for registration of the dozing amount.

As a shredder any type of mill can be used to divide the waste carefully in such a way that the plastic is not milled into flakes which are not too large or not too small. A size of 30 x 30 to 150 x 150 mm has proven to give good results. The shredder also must be able to cut up textiles, wooden material, bones and metals to a certain size in addition to other unknown material in the organic waste.

For fine shredding the so-called dissolver unit 3 is used. This dissolver mills the waste by means of a quick rotating paddle mechanism. The paddle as such is shaped as a saw blade where the teeth are specially treated. When this rotates quickly and the mixture has correct viscosity, a vortex in the liquid is created. This leads to very high shear forces at the paddle, and the material is fragmented by means of clean mechanical cutting as well as cavitation.

The dissolver unit 3 is shaped as a conical container. This means that heavier objects such as batteries, metals and such material, easily is sedimented and can be removed from the bottom of the container. This happens when the paddle is moving slowly.

In cases where a large degree of sorting errors occurs in the wet organic waste, an ordinary pumping solution may cause operation problems. In such a case a vacuum collecting tank may be used.

The plastic separation unit 5 comprises a pre-tank as well as one or more sieve separator units.

The combination of a shredder and a dissolver means that the decomposable organic waste is milled to a particle size being as small as possible, preferably below 1 mm and in no case more than 5 mm. The plastic film maintains a particle size larger than 20 x 20 mm. Other parts of the waste for example meaty bones are also milled to a particle size larger than 20 x 20 mm. This is especially the case with the joints whereas parts of the meat bones comprising bone marrow, are milled down to preferably less than 1 mm.

Paper is completely dissolved and napkins and towels comprising a plastic film part and an absorbent part are divided from each other. The absorbent is dissolved to less than 5 mm whereas the plastic film substantially is maintained above 20 x 20 mm.

With a large fraction of the waste milled to less than 1 mm and biologically "inert" materials are milled to above 20 x 20 mm, the resulting mixture is easy to separate in the sieve separator. The separated material (the screen goods) comprises little biologically decomposable material, whereas the filtrate contains almost no plastic film and a low content of biological "inert" material. Biological inert material such as paper fibres and absorbent fibres will be included in the digestate. However, this is contributing to give the dewatered digestate a good and light structure.

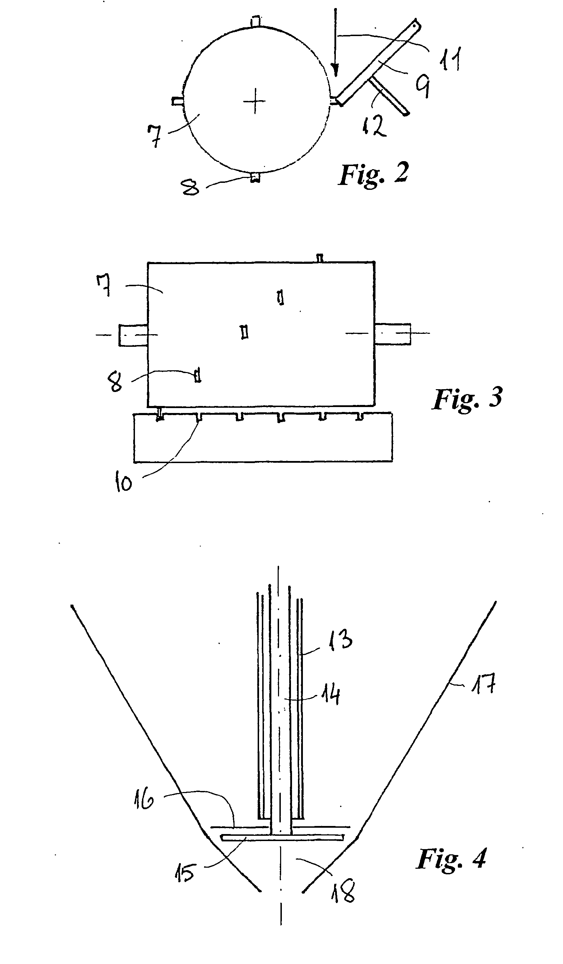

Figures 2 and 3 disclose schematically the principle structure of the shredder unit 2, basically comprising a drum 7 with teeth 8 and a stator plate 9 with the recesses 10 through which the teeth are guided when the drum 7 is rotated. The teeth 8 will tear the waste 11 being guided down to the stator plate 9 and especially will tear up plastics into smaller parts. The teeth 8 are placed on the drum 7 in a cyclonic pattern in such a way that the teeth are moving the waste 11 axially simultaneously with the shredding. With for example 18 teeth, each tooth will be divided from the neighbouring teeth by 20°. This contributes to axial transportation when larger objects arrive in the mill, such as the head of cabbage having large diameters. It is appropriate that the teeth have different heights to handle larger and smaller objects more easily and nevertheless perform fine shredding of plastics, textiles and other thin objects as well as ductile and strong objects.

The numbers of teeth are important in respect of how long particles should be made of for example a plastic bag.

A drum 7 having a diameter of 400 mm, provides a circumference of around 1,2 m and there may be provided a plastic string of up to 1,2 m length. However the frequency and the moving pattern of the plastic bag are essential. The falling speed of the plastic bag down into the shredder will influence and after that the speed is influenced by for example whether the shredder picks up the bag or if the bag is infiltrated with other material which for example is in contact with a drum. To avoid creation of long strings, more teeth are used in the circumference. For example can the teeth 8 be used to provide an object length of 0,15 m which is acceptable for the further fine shredding in the dissolver and the later separation process. The parameters such as the drum diameter, the number of teeth, the length of the teeth and the arrangement of the teeth substantially influence the size of the objects coming out of the shredder.

The shape of the teeth 8 as such is also important. It is appropriate to use teeth 8 with an angle of somewhat more than 90°. If the teeth is pointing inwardly at the tip, plastics will be captured as being on a hook and be moved around, which is not appropriate. The intervention in the cutting moment as such will be a far smaller angle than 90°, such as 60° because it is suitable that the object is not guided by the teeth, but is moved to pass by the stator plate 9. After the stator plate 9 it is on the other hand important that the object falls down from the teeth. The cooperation between the object falling from the teeth and the object being locked in such a way that it is cut and falling from the teeth, is ensured by providing the teeth with an angle of attack or more than 90° and the stator plate being in an oblique position in such a way that the angle between the attack surface of the teeth and the stator plate is for example 60°. Additionally the speed of the obj ects into the shredder contributes.

It is suitable that the stator plate 9 is hinged and has a counter pressure from for example pneumatic cylinders 12 ensuring that the stator plate is withdrawn in case hard object such as metals are contained in the waste. This is to avoid the shredder being destroyed.

Suitably the shredder may be operated in both directions in such a way that the teeth are alike on the front side and the back side and that pressure cylinders 12 are connected to the stator plate 9 on both sides of the shredder . It is also suitable that water is added into the treatment process already at this time, which water is heated to above 50 °C to melt fat and thereby contribute to lubricate the shredding process. This is important to emulsify fat substances mechanically in the dissolver.

Figure 4 discloses schematically the dissolver comprising a vertically arranged shaft 14 with rotating tearing blades 15. To avoid longer objects in fastening to the shaft 14 a stationary sleeve 13 is arranged around the shaft 14. In this way the shaft 14 is rotated and protected against exposure from objects between the tearing blade 15 and the lower edge of the sleeve 13 and a sealing 16 is arranged to ensure that objects are not pressed in between the shaft 14 and the sleeve 13.

The tearing blade 15 as such is shaped to carry out shearing processes and additionally to maximize cavitation. The combination of shearing force, pressure force and cavitation expose the objects for a pulsation which makes it quicker to divide smaller particles and also contributes to distributes the particles sizes in the mixture, which is important to achieve a good biogas process. With small particles a larger specific surface is achieved, accessible for microbes. Smaller particles also provide better control and dozing of the process.

The tearing plate 15 comprises teeth (not disclosed) ensuring tearing of materials to desired finesse. The teeth are pointed in a cross section and comprise a shearing wall of one side which faces first in the rotation direction. The teeth are shaped as a triangle comprising a strong pressure increase locally above the tooth. When the particles leave the teeth, the pressure falls and replaced by an under-pressure causing turbulence on the backside of the teeth as the teeth are straight. In this way an article which was exposed for compression, will be exposed for an expanding pressure and will be divided into smaller parts.

The tearing blade 15 also provides a strong pumping effect by acceleration radially and the particles are leaving the blade with a large speed. The pumping effect as such is important for the particles to be removed from the tearing zone at a highest possible frequency which is achieved by the diameter of the blade and the rotation frequency being adjusted to the viscosity and the adhering ability of the mixture.

The tank 17 may be conical with a larger diameter above than below. The flow in the tank 17 is accelerated respectively is slung up along the inclined wall of the tank and thereafter is falling down the sloping wall and down to the sealing 16. The normal force in the sealing 16 between the tearing blade 15 and mixture thereby is increased and a higher acceleration is achieved than would be the case if the tank 17 was cylindrical with almost vertical fall. If it should be desired to further optimize a teared up volume per time unit, the top of the tank 17 may be shaped with a narrow passage in such a way that the flow is guided as a return to the tearing zone. Such a variation needs less variation than a clean conical shape.

Below the tearing blade 15 there is a volume 18 ensuring the conditions for flowing under the tearing blade and also being sufficiently large to collect metals, larger bone remainder etc. This material which is substantially inorganic, is removed from the tank and thereby as early as possible from the process as such.

The size of the particles after the coarse shredder unit 2 and after the following tearing in the dissolver unit 3 provides a separable material due to the fact that for example plastics is torn into units which are not too big or not too small. Other special materials for example knife, forks, metal objects, batteries etc. are collected mainly in the dissolver vessel 4 of dissolver unit 3.

## Claims

1. Method for pre-treatment of source separated wet organic waste from house holds, institutional house holds etc., comprising shredding of the waste in a course shredder unit (2), **characterized in** allowing the shredded material to fall down to a fine dissolver unit (3) where more heavy obj ects are removed, adding a process liquid until a desired content of solids of 6 to 12 % is achieved, shredding the mixture with a rapid rotating paddle mechanism, transferring the mixture to a separation unit for plastics, and transportation of the remainder mixture into a plant for production of biogas and decomposing remainder.

2. Plant for pre-treating of source segregation wet organic waste from households, institutional households etc., comprising a screw conveyor being adapted to transport the source segregated waste from the reception bunker (1) of the plant, to a course shredder unit (2), **characterized in** a fine dissolver unit (3) being connected to the course shredder unit (2), the fine dissolver unit (3) comprising means for adding liquid from mud or thin phase material from decomposing tanks until the mixture comprises a content of solids of between 6 and 12 %, a separation unit (5) for plastics where biologically inert material is removed by means of screw press separator, being connected to the output from the fine dissolver unit (3) and that a unit (6) for production of biogas and decomposing remainders being connected to separation unit (5) for plastics.

3. Plant according to claim 2, **characterized in** the shredder unit (2) comprising a drum (7) having cycloidic arranged and outwardly protruding teeth (8) being moved through corresponding apertures (10) in a stator plate (9) adapted for receipt of the waste, and the stator plate (9) can be moved away from the drum (7) against an elastic device (12) when larger objects are dropped down against the stator plate (9).

4. Plant according to claim 2-3, **characterized in that** the fine dissolver unit (3) comprises a tank (17) having conically widening walls upwardly with a centrically arranged vertical shaft (14) comprising a tearing blade (15) at the lower end, a stationary sleeve (13) arranged around the shaft (14) and a sealing (16) between the tearing blade (15) and the lower end of the sleeve (13).

5. Plant according to claims 2-4, **characterized in** the tearing blade (15) comprising teeth (not disclosed) which in a cross section are pointed and comprising a shearing wall on one side facing the rotational direction and that the teeth are shaped as a triangle with a strong pressure increase locally above the tooth.

## Patentansprüche

1. Vorgehensweise zur Vorbehandlung von an der Quelle getrenntem, nass-organischem Abfall aus Haushalten, institutionellen Haushalten usw., wo der Abfall in einem Grobzerkleinerer (2) zerkleinert wird, **dadurch gekennzeichnet,**
- **dass** das zerkleinerte Material in eine Feinauflösungseinheit (3) hinunterfallen kann, wo schwerere Objekte entfernt werden,
- **dass** eine Prozessflüssigkeit hinzugefügt wird, bis ein gewünschter Feststoffanteil von 6% bis 12% errreicht ist,
- **dass** die Mischung mit einem schnell rotierenden Paddelmechanismus zerkleinert wird,
- dasss die Mischung zu einer Trenneinhet für Kunststoffe überführt wird,
- **dass** die Restmischung in eine Anlage zur Produktion von Biogas transportiert wird, und
- **dass** der Rückstand destruiert wird.

2. Anlage zur Vorbehandlung von an der Quelle getrenntem, nass-organischem Abfall aus Haushalten, Institutionshaushalten usw., welche einen Schneckenförderer enthält, der dazu eingerichtet ist, den quellen-getrennten Abfall von der Annahmegrube (1) der Anlage zu einem Grobzerkleinerer (2) zu transportieren, **gekennzeichnet durch**
- eine Feinauflösungseinheit (3), die an den Grobzerkleinerer (2) angeschlossen ist, wobei die Feinauflösungseinheit (3) Mittel umfasst, um eine Flüssigkeit aus Schlamm oder dünnphasigem Material aus Dekompositionstanks hinzuzufügen bis die Mischung einen Feststoffanteil zwischen 6% und 12% enthält,
- eine Trenneinheit (5) für Kunststoffe, die an den Ausgang der Feinauflösungseinheit (3) angeschlossen ist, wo biologisch inertes Material **durch** einen Presschneckenseparator entfernt wird, und
- eine Einhet (6) zur Produktion von Biogass und Rückstandsdestruktion, die an die Trenneinheit (5) für Kunststoffe angeschlossen ist.

3. Anlage nach Anspruch 2, **gekennzeichnet durch** die Zerkleinerungseinheit (2), die eine Trommel (7) umfasst, die zykloid angeordnete und nach aussen stehende Zähne (8) hat, welche **durch** entsprechende Öffnunggen (10) in einer Statorplatte (9) bewegt werden, die zur Entgegennahme des Abfalles eingerichtet sind, und wo die Statorplatte (9) von der Trommel (7) weg gegen eine elastische Anordnung bewegt werden kann wenn grössere Objekte auf die Statorplatte (9) hinunter fallen.

4. Anlage nach Anspruch 2-3, **dadurch gekennzeichnet, dass** die Feinauflösungseinheit (3) einen Tank (17) umfasst, welcher sich aufwärts kegelförmig ausweitende Wände mit einer zentrisch angeordneten vertikalen Welle (14) hat, welche ein Reibblatt (15) am unteren Ende, eine stationäre Hülse (13) um die Welle (14) herum angeordnet, und eine Dichtung (16) zwischen dem Reibblatt (15) und dem unteren Ende der Hülse (13) beinhaltet.

5. Anlage gemäss den Ansprüchen 2-4, **dadurch gekennzeichnet, dass** das Reibblatt (15) Zähne aufweist (nicht dargestellt), welche in einem Querschnitt gezeigt sind und welche eine Schneidwand auf einer Seite in Rotationsrichtung beinhalten und dass die Zähne als ein Dreieck ausgeformt sind mit einer starken Druckerhöhung örtlich oberhalb des Zahnes.

## Revendications

1. Méthode de prétraitement de déchets organiques humides triés à la source, provenant de foyers privés, foyers de collectivités, etc., comprenant le broyage des déchets dans une unité de broyage grossier (2) **caractérisée en ce qu'elle** permet aux matériaux broyés de tomber dans une unité de dissolution fine (3) où les objets les plus lourds sont éliminés, ajoutant un liquide de traitement jusqu'à obtention d'une teneur en solides de 6 à 12 %, broyant le mélange avec un mécanisme à pales tournant rapidement, transférant le mélange à une unité de séparation des plastiques, et transportant le mélange restant à une usine de production de biogaz et de décomposition du restant.

2. Usine de prétraitement de déchets organiques humides triés à la source, provenant de foyers privés, foyers de collectivités, etc., comprenant un convoyeur à vis sans fin convenant au transport des déchets triés à la source depuis la fosse de réception (1) de l'usine à une unité de broyage grossier (2), **caractérisé en ce qu**'une unité de dissolution fine (3) est connectée à l'unité de broyage (2), l'unité de dissolution fine (3) comprenant des moyens d'ajouter des liquides - des boues aux matériaux en phase fine provenant des silos de décomposition, jusqu'à ce que le mélange contienne une part de solides comprise entre 6 et 12 %, par une unité de séparation (5) pour les plastiques où les matériaux biologiquement inertes sont éliminés par un séparateur à vis de pression connecté à la sortie de l'unité de dissolution fine (3) et par une unité (6) de production de biogaz et de décomposition du restant, connectée à l'unité de séparation (5) des plastiques.

3. Usine conforme à la revendication 2, **caractérisée en ce que** l'unité de broyage (2) comprend un tambour (7) pourvu de dents (8) disposées selon un plan cycloïdique et dépassant à l'extérieur (8), qui se déplacent à travers des ouvertures correspondantes (10) dans une plaque de stator (9) adaptée à la réception des déchets, la plaque de stator (9) pouvant être écartée du tambour (7) contre un dispositif élastique (12) quand des objets de taille plus importante sont amenés contre la plaque du stator (9).

4. Usine conforme aux revendications 2-3, **caractérisée en ce que** l'unité de dissolution fine (3) comprend un réservoir (17) aux parois s'évasant en cône vers le haut et avec un arbre vertical central (14) comprenant une lame de déchiquetage (15) à son extrémité inférieure, un manchon stationnaire (13) placé autour de l'arbre (14) et un joint étanche (16) entre la lame de déchiquetage (15) et l'extrémité inférieure du manchon (13).

5. Usine conforme aux revendications 2-4, **caractérisée en ce que** la lame de déchiquetage (15) comprend des dents (non illustrées) qui ont en coupe une forme pointue et comprennent une paroi de coupe sur un côté faisant face à la direction de rotation, et que ces dents sont formées en triangle avec une forte augmentation de la pression localisée au-dessus de la dent.
